# FASCICULE DE BREVET EUROPEEN

(11) **EP 2 648 385 B1**
(45) Date de publication et mention de la délivrance du brevet: **29.08.2018**
(21) Numéro de dépôt: 13161891.0
(22) Date de dépôt: 29.03.2013
(51) Int. Cl.: H04L 29/06, H04M 3/42

(54) **Services externes pour appels internes**
Externe Dienstleistungen für interne Anrufe
External services for internal calls

(30) Priorité: 02.04.2012 FR 1252991
(43) Date de publication de la demande: 09.10.2013
(73) Titulaire: Orange, 75015 Paris (FR)
(72) Inventeur: Le Sage, Benoit, 75014 Paris (FR); Bonneau, Florent, 92190 Meudon (FR); Fremond, Philippe, 75013 Paris (FR); Pascual, Juan, 92300 Levallois Perret (FR)
(74) Mandataire: Cabinet Plasseraud

(56) Documents cités:
- EP-A1- 2 099 205
- EP-A1- 2 299 648
- WO-A2-01/06740

## Description

La présente invention concerne le domaine des télécommunications entre des terminaux d'utilisateurs.

Elle concerne plus précisément l'initialisation de sessions de communication téléphonique entre terminaux appartenant à un réseau local relié à un autocommutateur téléphonique privé. On entend par communication toute communication en temps réel telle qu'une communication téléphonique ou par vidéophonie par exemple, prise en charge par un autocommutateur privé.

La téléphonie IP (ou ToIP, pour « Telephony over Internet Protocol » en anglais) permet d'utiliser une architecture dans laquelle un autocommutateur téléphonique privé d'un client, en charge d'un réseau local, est relié à une plateforme de services d'un opérateur auquel le client est abonné, la plateforme étant dans un réseau externe au réseau local. Une telle architecture est appelée « Trunking ». La plate-forme de l'opérateur et l'autocommutateur peuvent communiquer via différents protocoles de signalisation et protocoles média sur IP, tels que le protocole SIP (pour Session Initiation Protocol » en anglais) permettant la signalisation, H323 permettant la signalisation, et le protocole RTP (pour « Real-time Transport Protocol » en anglais) pour le transport média.

On entend par autocommutateur tout dispositif de routage permettant la gestion de communications dans un réseau local, tel qu'un PABX (pour « Private Automated Branch Exchange » en anglais, aussi appelé PBX) ou un PABX-IP aussi appelé IPBX. L'autocommutateur peut également être assimilé à un « standard téléphonique ».

Selon cette architecture, la plateforme de l'opérateur est utilisée pour fournir des fonctions de routage d'appel afin d'acheminer des communications entre le réseau local du client et différents réseaux de téléphonie : réseau IP, réseau RTC (pour Réseau Téléphonique Commuté) et réseaux mobiles. La plate-forme de services de l'opérateur peut en outre être utilisée pour fournir des services voix complémentaires à ceux rendus par l'autocommutateur du client afin d'enrichir l'offre de l'opérateur et l'expérience de l'utilisateur.

Cependant, une telle architecture, désignée par « *Trunking* » en anglais, présente des limites quant à l'interopérabilité entre l'autocommutateur et la plate-forme de l'opérateur, ce qui ne permet pas, à l'heure actuelle, de rendre depuis le réseau externe, des services additionnels de type Centrex, à des utilisateurs du réseau local pour tous les cas d'appels, et notamment pour les appels internes au réseau local, qui ne transitent pas par le réseau externe et donc pas par la plateforme de l'opérateur.

En effet, par défaut, l'autocommutateur est en charge de fournir des services de téléphonie avancés à des utilisateurs du réseau local, et fournit notamment un Plan de Numérotation Privé (ou PNP), permettant de composer des numéros privés pour atteindre des terminaux du réseau local 1. On entend par numéro privé tout numéro uniquement routable dans un réseau local d'un client. L'autocommutateur est en outre en charge de renvoyer des appels, de transférer des appels et de masquer le numéro de l'appelant (CLIR pour « Calling Line Identification Restriction » en anglais).

Cependant, la présence de l'autocommutateur dans le réseau local soulève des difficultés particulières quand il s'agit de rendre des services additionnels depuis la plateforme externe de l'opérateur, notamment en ce qui concerne une compatibilité avec une interface SIP de l'autocommutateur, le PNP géré par l'autocommutateur, ainsi que le routage des appels internes (dans le réseau local) via l'autocommutateur.

Dans le cadre d'appels internes au réseau local en numérotation courte ou privée selon le PNP (voire en numérotation longue ou publique selon la configuration de l'autocommutateur), les appels ne sont pas routés vers la plate forme de l'opérateur mais sont acheminés localement par l'autocommutateur, échappant ainsi à la logique de services de la plate-forme.

Ainsi, une architecture de type « Trunking » rend hétérogène les services rendus aux utilisateurs du réseau local, selon que l'appel soit interne au réseau local ou provenant de l'extérieur. En effet, un service rendu par la plateforme sur les appels entrants externes au réseau local à destination d'un terminal du réseau local n'est plus rendu pour un appel interne au réseau local. L'expérience des utilisateurs du réseau local en est ainsi dégradée.

### État de la technique

WO 01/06740 A2 décrit un procédé permettant de rendre les fonctionnalités d'un PBX accessibles à des utilisateurs de téléphonie sur IP.

EP 2 299 648 A1 concerne la gestion de communication dans un réseau local IP, par l'utilisation d'autocommutateurs de type IPBX.

La présente invention vient améliorer la situation.

A cet effet, un premier aspect de l'invention concerne un procédé selon la revendication 1. On entend par autocommutateur tout dispositif de routage de type PBX (pour « Private Branch Exchange ») ou IPBX (pour PBX au protocole IP) par exemple. Un identifiant privé peut comprendre tout type d'identifiant partagé par la plateforme de services et l'autocommutateur. A cet effet, l'identifiant privé peut par exemple être obtenu à partir d'un numéro privé correspondant à une sous-partie d'un numéro publique. On entend par numéro publique, tout numéro qui est routable en dehors du réseau local. L'identifiant privé peut en outre être un identifiant public comme détaillé ultérieurement.

On entend par réseau local tout réseau géré par un PBX ou un IPBX et comprenant une pluralité de terminaux. Les terminaux peuvent être localisés au sein d'un même site physique ou sur des sites distants. En effet, un même IPBX peut gérer des terminaux répartis sur une pluralité de sites satellites raccordés entre eux, par exemple, par un même réseau de type IPVPN (pour « IP Virtual Private Network » en anglais).

On entend par profil d'abonné un ensemble de services dédiés à un abonné et fournis par l'opérateur de la plateforme. Un profil d'abonné peut comprendre des identifiants publics de terminaux, des fonctionnalités de renvoi, d'alertes séquentielles ou simultanées, de routage vers un serveur de messagerie, de renvoi dépendant d'un calendrier, de serveur vocal interactif, etc.

La présente invention permet ainsi la redirection d'une requête initiale interne à un réseau local, vers un identifiant privé au travers d'une plateforme de services externe au réseau local et stockant un profil d'abonné en association avec l'identifiant privé. Des services supplémentaires, propres à la plateforme de services, peuvent ainsi être rendus même dans le cas d'appels entre terminaux d'un même réseau local. Un tel renvoi peut par ailleurs être traité par l'autocommutateur de manière transparente vis-à-vis de l'utilisateur appelant et de l'utilisateur appelé.

Selon certains modes de réalisation, le second terminal est identifié dans la requête initiale par un identifiant public routable sur un réseau externe et sur le réseau local ou par un identifiant routable uniquement dans le réseau local géré par l'autocommutateur.

Ainsi, l'autocommutateur peut comprendre une base de données stockant directement en association des identifiants de terminal pouvant être routables à l'extérieur du réseau local ou dans le réseau local, et des identifiants privés, ce qui simplifie la modification d'un champ de destination de la requête initiale lors de la redirection de la requête initiale de l'autocommutateur vers la plateforme de services.

Selon certaines réalisations, l'autocommutateur est configuré pour rediriger inconditionnellement vers la plateforme de services les requêtes d'initiation de sessions entre deux terminaux du réseau local, et est configuré pour router vers un terminal du réseau local les requêtes reçues de la plateforme de services externe à destination d'un identifiant public du terminal.

Ces modes de réalisation permettent d'éviter tout phénomène de bouclage de la requête entre l'autocommutateur et la plateforme de services. On entend par phénomène de bouclage une redirection « à l'infini » de la requête redirigée entre la plateforme et l'autocommutateur. En effet, l'utilisation d'une redirection pour les requêtes internes n'affecte pas la réception et le routage dans le réseau local de requêtes provenant de la plateforme de services.

Ainsi, la plateforme peut mettre en oeuvre des services de type Centrex dans le cadre d'un appel interne au réseau local. De tels services ne sont généralement pas disponibles au niveau de l'autocommutateur et sont permis par l'utilisation d'un identifiant privé associé à un profil d'utilisateur dans la plateforme. Dans certains cas, ces services sont permis par l'autocommutateur, mais une homogénéité dans le traitement des appels internes et externes requiert une synchronisation coûteuse entre l'autocommutateur et la plateforme de services. Le profil d'utilisateur est configurable (et reconfigurable) par l'utilisateur qui peut ainsi gérer des services supplémentaires fournis par le réseau de l'opérateur, de renvoi, d'appels simultanés ou séquentiels, de messagerie, etc.

En complément, selon un mode de réalisation, le profil d'abonné du second utilisateur peut comprendre un identifiant public du second terminal, l'identifiant public permettant le routage de la requête redirigée vers le second terminal, et le traitement de la requête peut comprendre, lorsque le profil d'abonné est défini pour faire sonner le second terminal :
- routage de la requête redirigée reçue par la plateforme de services, vers l'autocommutateur, en remplaçant l'identifiant privé du second utilisateur par l'identifiant public du second terminal ;
- sur réception, par l'autocommutateur, de la requête routée par la plateforme de services, routage de la requête vers le second terminal du réseau local en vue d'établir une session de communication entre le premier terminal et le second terminal.

Selon ces modes de réalisation, il est avantageusement possible de router la requête redirigée à destination de l'autocommutateur qui, sur la base de l'identifiant public du second terminal, est apte à router la requête à destination du second terminal. On entend par identifiant public tout identifiant permettant le routage de la requête à la fois dans le réseau local et à l'extérieur du réseau local.

Selon une caractéristique de réalisation, sur réponse positive du second terminal du réseau local et sur détection par la plateforme de services que le premier terminal et le second terminal appartiennent au même réseau local, une session de communication peut être établie entre le premier terminal et le second terminal, et seules des données de signalisation échangées entre le premier terminal et le second terminal peuvent transiter par la plateforme de services, des données média à échanger entre le premier terminal et le second terminal transitant dans le réseau local.

Ainsi, l'établissement d'une session de communication entre le premier terminal et le second terminal ne nécessite pas d'utiliser deux canaux de communication entre la plateforme et l'autocommutateur pour le transport des données média. Ainsi, une surcharge de la bande passante est évitée, d'autant plus que, dans la plupart des cas, le nombre de communications permises pour un unique commutateur est limité par l'opérateur en charge de la plateforme de services.

En complément ou en variante, le profil d'abonné du second utilisateur peut comprendre en outre un autre identifiant public d'au moins un troisième terminal, le troisième terminal étant un terminal du second utilisateur et étant accessible via un réseau de communication tiers, le profil d'abonné peut être défini pour transmettre une nouvelle requête à destination de l'autre identifiant public, séquentiellement ou simultanément à la requête routée vers l'autocommutateur et comprenant l'identifiant public du second terminal.

Le réseau tiers de communication peut comprendre un réseau de téléphonie mobile, un réseau téléphonique commuté ou encore tout autre réseau de téléphonie/vidéophonie ou de messagerie instantanée sur IP.

Ainsi, à partir d'un appel interne au réseau local, il est possible d'alerter un terminal supplémentaire appartenant au second utilisateur appelé, lors d'un appel initialement destiné à être interne au réseau local. Par exemple, le troisième terminal peut être un terminal mobile, ce qui est particulièrement avantageux, notamment lorsque le second utilisateur est régulièrement en déplacement.

En complément, le profil d'abonné du second utilisateur peut comprendre un renvoi vers un serveur de messagerie centralisé, et, lorsqu'aucune session de communication n'est établie, ni entre le premier terminal et le second terminal, ni entre le premier terminal et le troisième terminal, la plateforme de services peut renvoyer la requête du premier terminal vers le serveur de messagerie du second utilisateur.

Un service de messagerie centralisé est ainsi mis en oeuvre. Le serveur de messagerie peut par exemple être un serveur de messagerie d'un terminal mobile du second utilisateur, qui peut alors consulter des messages destinés au terminal du réseau local et au terminal mobile via une unique messagerie.

En variante, le profil d'abonné du second utilisateur peut comprendre un identifiant public d'au moins un troisième terminal du second utilisateur, le troisième terminal étant accessible via un réseau de communication tiers , le profil d'abonné peut être défini pour renvoyer les requêtes destinées au second utilisateur vers le troisième terminal, et le procédé peut comprendre en outre la transmission de la requête vers ledit réseau tiers en remplaçant l'identifiant privé du second utilisateur par l'identifiant public du troisième terminal.

A nouveau, le réseau de communication tiers peut comprendre un réseau de téléphonie mobile, un réseau téléphonique commuté ou encore tout autre réseau de téléphonie/vidéophonie ou de messagerie instantanée sur IP.

Cette réalisation permet de mettre en oeuvre des services de renvoi que procure la plateforme de services. Ainsi, lorsque le second utilisateur est en déplacement, il peut activer le service de renvoi via son profil d'abonné afin que les appels internes au réseau local et destinés au second terminal soient directement redirigés vers le troisième terminal pouvant être un terminal mobile.

Il est à noter que des services autres qu'une messagerie centralisée, ou des services de sonneries simultanées/séquentielles, de renvoi. En effet, la plateforme de service peut réaliser n'importe quel type de service : renvoi dépendant d'un calendrier, serveur vocal interactif, etc.

Un deuxième aspect de l'invention concerne un produit programme d'ordinateur selon la revendication 9. Un troisième aspect de l'invention concerne un dispositif de routage téléphonique selon la revendication 10. Un autre aspect de l'invention concerne un système pour l'établissement d'une session de communication entre un premier utilisateur et un second utilisateur selon la revendication 11. D'autres caractéristiques et avantages de l'invention apparaîtront à l'examen de la description détaillée ci-après, et des dessins annexés sur lesquels:
- la figure 1 illustre une architecture générale d'un système de communication selon certains modes de réalisation de l'invention ;
- la figure 2 illustre un diagramme d'échanges entre les entités représentées sur la figure 1, selon certains modes de réalisation de l'invention ;
- la figure 3 est un diagramme illustrant les étapes d'un procédé d'initiation de session de communication selon un exemple de réalisation de l'invention ;
- la figure 4 illustre un dispositif de routage selon un mode de réalisation de l'invention ;
- la figure 5 représente une plateforme de services un mode de réalisation de l'invention.

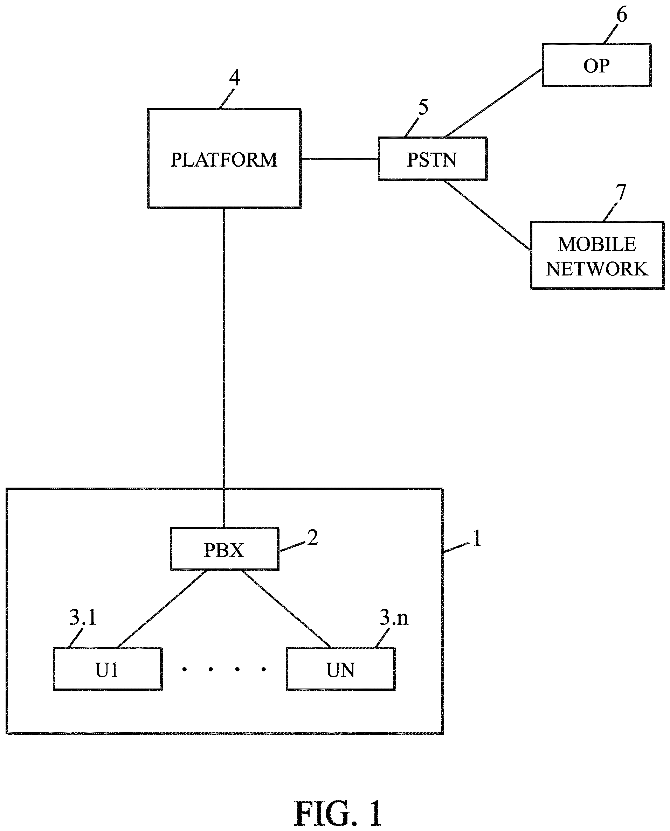

La **figure 1** illustre un système de communication dans un exemple de réalisation de l'invention.

Le système comprend un réseau de communication local 1 comprenant une pluralité de terminaux d'utilisateurs 3.1 à 3.n, qui sont considérés par la suite comme étant des postes fixes. Le réseau local 1 peut par exemple correspondre à un réseau local d'entreprise, ou de tout type d'administration. La gestion des communications dans le réseau local 1 est assurée par un autocommutateur téléphonique privé 2 relié à chacun des terminaux 3.1 à 3.n. Aucune restriction n'est attachée au nombre n de terminaux compris dans le réseau local 1. Par souci de simplification, deux terminaux 3.1 et 3.n sont considérés par la suite : un premier terminal, le terminal 3.1, d'un premier utilisateur (utilisateur appelant) et un second terminal, le terminal 3.n, d'un second utilisateur (utilisateur appelé).

L'autocommutateur 2, qui est plus généralement un dispositif de routage, est en outre relié à une plateforme d'un opérateur 4 dans un réseau externe. Comme précédemment expliqué, la plateforme 4 permet d'apporter des services voix complémentaires et intègre de plus des fonctionnalités de routage d'appel.

La plate forme 4 et l'autocommutateur 2 peuvent communiquer selon un protocole de voix IP par exemple. Dans ce cas, l'autocommutateur 4 est de type IPBX ou PBX TDM (pour « Time Division Multiplexing » en anglais) raccordé par une passerelle Q931/SIP au réseau IP par exemple.

La plate-forme 4 peut également être reliée à différents réseaux de téléphonie, tels qu'un réseau téléphonique commuté RTC 5 via une passerelle IP-RTC, ce qui permet à la plate-forme 4 d'accéder ainsi à des réseaux d'opérateurs tiers 6, ainsi qu'à un réseau mobile 7.

Dans une architecture classique de type Centrex, les terminaux 3.1 à 3.n sont reliés directement à la plate-forme 4, sans passer par l'autocommutateur 2. Comme expliqué dans ce qui suit, la présente invention permet de coupler entre elles des fonctionnalités d'autocommutateur privé avec celles de la plateforme, sans lien direct, afin de transformer une ligne auto-commutée en une ligne Centrex.

Afin de surmonter les inconvénients liés aux architectures actuelles de type « Trunking », une première solution consisterait à rediriger systématiquement vers un terminal externe au réseau local 1 les appels (plus précisément les requêtes d'initiation d'une session de communication) qui sont initialement émis par le terminal 3.1 à destination du terminal 3.n et reçus par l'autocommutateur 2. Une telle redirection peut être mise en oeuvre inconditionnellement par un mécanisme de type CFU (pour « Call Forward Unconditional » en anglais). Par exemple, dans le cas où :
- le terminal fixe 3.1 est associé à un premier utilisateur, appelant, et
- le terminal fixe 3.n est associé à un identifiant du second utilisateur, appelé,
une requête initiale, initialement destinée au terminal fixe 3.n et émise par le terminal 3.1, peut être redirigée par l'autocommutateur 2 vers la plateforme 4, afin de pouvoir bénéficier des services assurés par la plateforme de services 4.

Cependant, la gestion des identifiants transmis dans les requêtes permettant l'initiation de sessions de communication varie selon les pays, et selon les opérateurs et les protocoles de signalisation utilisés. En particulier, la requête redirigée vers la plateforme 4 ne comprend pas nécessairement d'informations indiquant qu'il s'agit d'une requête qui a fait l'objet d'une redirection, et ne comprend pas non plus d'identifiant public du terminal 3.n initialement appelé.

Ainsi, une requête redirigée vers un terminal externe au réseau local 1 via la plateforme 4 apparaît comme une requête initialement émise par le terminal 3.1 vers un terminal non compris dans le réseau local (sinon la requête aurait été acheminée directement vers ce terminal du réseau local par l'autocommutateur 2) et pouvant appartenir à un autre réseau, mobile ou RTC par exemple. Ainsi, sur réception de la requête redirigée, la plateforme 4 traite la requête redirigée comme un appel départ et applique ainsi une logique de services uniquement liée à l'appelant (terminal 3.1), et non à l'appelé initial (terminal 3.n). De plus, dans de nombreux pays, l'indication du fait que la requête a été redirigée est prohibée.

Aucun service de type Centrex ne peut donc être assuré pour le terminal 3.n du second utilisateur appelé, dans le cas d'un appel interne au réseau local 1.

De plus, cette solution selon laquelle on effectue une redirection systématique des requêtes initiales d'initiation de session de l'autocommutateur 2 vers la plate forme de services n'est pas satisfaisante pour permettre aux services de la plateforme 4 de cohabiter avec les services de l'autocommutateur 2. En effet, même si la requête redirigée vers la plateforme 4 était toujours destinée au second terminal 3.n, la requête redirigée serait alors retransmise par la plateforme 4 vers l'autocommutateur 2. Ce dernier, étant programmé pour rediriger systématiquement toute requête vers la plateforme 4, redirigerait la requête à destination de la plateforme 4 créant ainsi une boucle conduisant à l'échec de l'initiation de la session de communication entre les premier et second terminaux.

Quand bien même la requête redirigée serait finalement routée par l'autocommutateur 2 vers le second terminal 3.n et que le second utilisateur appelé décrocherait le second terminal 3.n, des données média à échanger entre le premier terminal 3.1 et le second terminal 3.n utilisent inutilement deux canaux de communication. Plus précisément, ces données transitent via la plateforme de services 4 créant ainsi deux canaux de communication distincts pour un même client (à savoir le réseau local 1) : ce phénomène est qualifié de « tromboning » en vocable anglais. En effet, la plateforme 4 ne tient pas compte du fait que le premier terminal 3.1 est situé sur le même réseau local 1 que le second terminal 3.n.

Ainsi, pour chaque appel interne, selon cette première solution, deux canaux de communication sont utilisés par l'autocommutateur 2, ce qui limite la bande passante disponible pour le réseau local 1. En effet, la plateforme est généralement dimensionnée, pour un client déterminé (l'entreprise possédant le réseau local 1 par exemple), pour supporter un nombre maximum et déterminé d'appels simultanés (notion généralement appelée CAC pour « Call Admission Control » en anglais) pour lequel le client a souscrit en fonction de ses besoins (importance du réseau local 1 dans l'entreprise, nombre n de terminaux à couvrir, etc.).

Deux alternatives sont alors possibles pour le client :
- soit le client conserve la même bande passante que celle initialement souscrite et le client risque alors une saturation fréquente des accès (appels rejetés par la plateforme 4), ce qui n'est pas acceptable pour le client ;
- soit le client souscrit à un abonnement préférentiel lui offrant plus de canaux de communication mais ayant un coût d'abonnement supplémentaire important, car l'opérateur doit mettre plus de ressources à disposition de ses clients.

Ainsi, cette solution présente de nombreux inconvénients pour permettre de combiner des services de type Centrex avec des services fournis par l'autocommutateur 4, dans le cas des appels internes au réseau local 1.

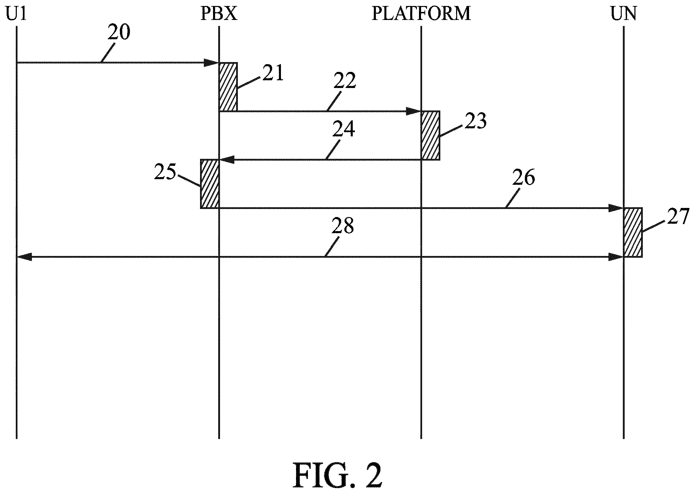

Dès lors, on décrit ci-après en référence à la **figure 2** un diagramme d'échanges entre les entités du système de communication de la figure 1, conforme à des modes de réalisation de l'invention et permettant de résoudre les inconvénients mentionnés ci-dessus en relation avec la solution présentée ci-dessus.

Selon l'invention, on propose d'identifier le second utilisateur du second terminal 3.n appelé dans la requête redirigée par l'autocommutateur 2, grâce à un identifiant téléphonique privé, connu uniquement par la plate forme 4 et par l'autocommutateur 2.

En outre, chaque identifiant privé d'un utilisateur d'un terminal du réseau local 1 peut être associé dans la plateforme 4 à un profil d'abonné de cet utilisateur, chaque profil d'abonné pouvant comprendre des identifiants publics de terminaux, des fonctionnalités de renvoi, d'alertes séquentielles ou simultanées et/ou de routage vers un serveur de messagerie, comme détaillé plus bas.

Ainsi, en référence à la figure 2, lors d'une étape 20, le premier terminal 3.1 émet une requête initiale d'initialisation de session de communication à destination du second terminal 3.n. Cette requête est donc adressée au second terminal 3.n. D'ailleurs, dans ce qui suit, l'expression « à destination de » signifie que la requête initiale est adressée au second terminal 3.n. La requête initiale étant interne au réseau local 1, elle est transmise durant l'étape 20 à l'autocommutateur 2. Dans la pratique, cet adressage dépend du protocole d'initialisation de session utilisé. Par exemple, dans le cadre du protocole SIP l'adressage se fait via un champ destinataire R-URI (pour « Request-URI ») de la requête initiale. Le terminal destinataire peut être repéré dans ce champ par un identifiant public, de type numéro de téléphone complet, qui est utilisable dans tout réseau externe au réseau local 1 ou de type SIP URI (« Uniform Resource Identifier » en anglais) dont le nom d'utilisateur (communément appelé « user part », pouvant être une chaîne de caractères alphanumériques, etc) n'est pas nécessairement un numéro, ou encore par un identifiant de type numéro abrégé ou extension utilisable uniquement pour un routage au sein du réseau local 1. En résumé, le terminal destinataire est identifié dans la requête initiale par tout identifiant permettant de router une requête vers ce terminal, que cet identifiant soit propre au réseau local 1 ou routable dans tout type de réseau. Pour la suite, un tel identifiant est appelé « identifiant de terminal ».

A une étape 21, l'autocommutateur 2, qui peut stocker les identifiants privés des utilisateurs en association avec les identifiants de terminal respectifs des terminaux 3.1-3.n, déduit de la requête initiale reçue l'identifiant privé qui est associé à l'identifiant de terminal du second terminal. Une telle association est permise par des services classiques de redirection.

A cette même étape 21, la requête initiale est modifiée en remplaçant, dans le champ R-URI (dans le cas du protocole SIP), l'identifiant de terminal du second terminal (numéro publique de type SDA, numéro privé, transmis par exemple en SIP sous forme de SIP URI ou de TEL URI) par l'identifiant privé déduit. L'autocommutateur 2 peut identifier, via son PNP ou table de routage, que le destinataire de la requête initiale liée à la redirection n'est pas interne au réseau local 1 et achemine alors la requête initiale ainsi modifiée vers la plateforme de services 4. L'identifiant privé peut être un numéro court de la forme 9MCDU, où MCDU désigne les quatre derniers chiffres d'un numéro long pouvant correspondre à l'identifiant de terminal du second terminal. En variante, l'identifiant privé peut également être un numéro long ou tout type d'identifiant public, dès lors qu'il est partagé à la fois par l'autocommutateur 2 et la plateforme 4. Cependant, lorsque l'identifiant privé permet de router la requête initiale modifiée directement vers le second terminal 3.n (ce qui est le cas pour un numéro long), et afin que l'autocommutateur 2 ne route pas la requête initiale modifiée comprenant l'identifiant privé du terminal 3.n directement vers le terminal 3.n, une configuration particulière de l'autocommutateur 2 peut être prévue afin de permettre la redirection de la requête vers la plateforme 4.

A une étape 22, la requête initiale ainsi modifiée est redirigée à l'extérieur du réseau local 1, vers la plateforme 4, à destination de l'identifiant privé.

Ainsi, à une étape 23, sur réception par la plateforme 4 de la requête redirigée, la plateforme déclenche tout d'abord une logique de service associée au terminal appelant (le premier terminal 3.1), puis détecte que l'identité privée contenue dans un champ de destination de la requête redirigée correspond à un profil d'abonné du second utilisateur, comme précédemment expliqué.

La plateforme 4 peut alors avantageusement traiter la requête redirigée en fonction du profil d'abonné du second utilisateur. Dans ce qui suit, on considère, par souci de simplification, que le profil d'abonné est configuré pour router la requête redirigée à destination de l'identifiant public du second terminal 3.n. Cependant, comme détaillé ultérieurement, le profil d'abonné peut prévoir de créer des alertes simultanées ou séquentielles sur plusieurs terminaux du second utilisateur, la mise en place de services de messagerie centralisés, un renvoi vers un troisième terminal (dont dispose le second utilisateur) ou tout autre service de téléphonie en arrivée rendu par la plateforme de services.

L'identifiant public du second utilisateur est alors positionné en destinataire de la requête redirigée, et la requête redirigée est routée à une étape 24 vers l'autocommutateur 2 en charge du routage de la requête dans le réseau interne 1. Les étapes 20 à 24 permettent donc d'acheminer la requête initiale vers la plateforme 4 qui peut traiter la requête redirigée comme une requête « on-net » (appel en numérotation privée) et appliquer le profil d'abonné de l'utilisateur destinataire de l'appel.

Afin que l'autocommutateur 2 ne renvoie pas la requête, routée par la plateforme 4, à nouveau vers la plateforme 4, l'autocommutateur 2 peut être configuré pour rediriger inconditionnellement vers la plateforme de services 4 uniquement les requêtes d'initiation de sessions entre deux utilisateurs du réseau local 1, et peut être configuré pour router vers un terminal du réseau local 1 les requêtes reçues depuis la plateforme 4. Ainsi, en différenciant les requêtes par leur nature, interne ou externe, la présente invention permet d'éviter un « bouclage » des requêtes (redirection des requêtes « à l'infini ») entre l'autocommutateur 2 et la plateforme de services 4.

A une étape 25, l'autocommutateur 2 détecte que la requête routée par la plateforme 4 provient de la plateforme 4 et non d'un terminal du réseau interne 1 (par détection de l'adresse IP de la plateforme par exemple) et détecte l'identifiant public du second terminal 3.n vers lequel la requête doit être routée.

La requête routée par l'autocommutateur 2 est alors transmise à une étape 26 au second terminal 3.n du second utilisateur, provoquant ainsi une alerte de type sonnerie par exemple sur le second terminal durant l'étape 27.

Dans l'exemple considéré ici, le second utilisateur décroche le second terminal 3.n à la fin de l'étape 27. Afin d'éviter que l'appel ne génère pas l'effet de « tromboning » précité dans le réseau externe comprenant la plateforme 4, la présente invention propose de faire transiter des données média directement entre le premier terminal 3.1 et le second terminal 3.n(« relâchement » des données média) sans transiter par la plateforme 4. Ces données média peuvent par exemple correspondre à des données de voix entre les utilisateurs. Des données de signalisation peuvent quant à elles transiter via l'autocommutateur 2 et la plateforme 4. Afin de permettre un tel relâchement des données média, la plateforme 4 doit au préalable détecter que le terminal appelant et le terminal appelé sont sur le même réseau local. Une telle détection peut être basée sur des informations de signalisation SIP ou/et des adresse IP du réseau local 1 (de l'autocommutateur 2 ou des terminaux 3.1 à 3.n).

Par exemple, lorsqu'un système d'adressage de type NAT (pour « Network Adressing Translation » en anglais) est utilisé par l'autocommutateur 2, l'émetteur de la requête redirigée a la même adresse IP que le destinataire (celle de l'autocommutateur 2) du point de vue de la plateforme 4. La plateforme 4 peut donc détecter par simple comparaison s'il s'agit d'un appel interne au réseau local 1 ou non.

Selon un autre exemple, tous les identifiants de type numéros privés et publiques des terminaux 3.1 à 3.n du réseau local 1 peuvent être déclarés sur la plateforme 4 et stockés dans une base de données locale de la plateforme 4. Ainsi, la plateforme 4 peut déterminer, à partir des champs de la requête initiale respectant le protocole de signalisation d'appel, s'il s'agit d'une requête d'initiation d'un appel interne au réseau local 1 ou non.

Ainsi, seules des données de signalisations peuvent transiter par la plateforme 4 lors de l'appel entre le premier terminal et le second terminal, si bien que la bande passante consommée dans le réseau externe est négligeable par rapport à l'utilisation de deux canaux de communication pour le transport de données média. De plus, l'opérateur en charge de la plateforme 4 peut prévoir que le transport des données de signalisation au travers de la plateforme 4 soit exclu par le mécanisme CAC, afin de préserver le nombre de communications maximal permis pour le réseau local 1.

D'autres variantes ou modes de réalisation complémentaires sont présentés dans ce qui suit.

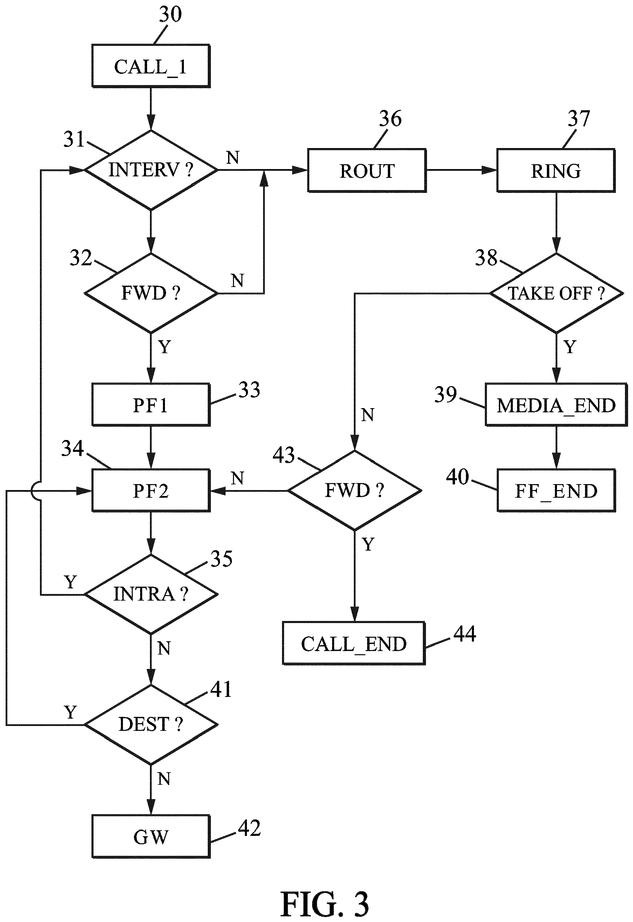

**La** **figure 3** est un diagramme d'état représentant les étapes du procédé de communication selon un exemple de réalisation de l'invention.

A une étape 30, un terminal appelant émet une requête initiale à destination d'un terminal appelé appartenant au réseau local, le terminal appelé étant identifié par un identifiant de terminal dans la requête initiale.

A une étape 31, la requête initiale est interceptée par l'autocommutateur 2 qui vérifie si la requête initiale provient d'un terminal interne au réseau local 1 ou d'un terminal externe.

Si la requête initiale est une requête externe, la requête est routée dans le réseau local par l'autocommutateur 2 selon l'étape 36 détaillée ultérieurement.

Dans le cas où la requête initiale est une requête interne, l'autocommutateur 2 vérifie à une étape 32 s'il est configuré pour renvoyer inconditionnellement les requêtes internes vers la plateforme 4.

Si l'autocommutateur 2 n'est pas configuré pour renvoyer inconditionnellement les requêtes internes vers la plateforme 4, la requête initiale est routée en interne selon l'étape 36 détaillée ultérieurement.

Si l'autocommutateur 2 est configuré pour renvoyer inconditionnellement les requêtes internes vers la plateforme 4, l'autocommutateur 2 remplace, dans le champ de destination de la requête initiale, l'identifiant de terminal du terminal appelé par l'identifiant privé associé au terminal appelé dans l'autocommutateur 2. La requête initiale ainsi modifiée est alors redirigée vers la plateforme 4.

Sur réception par la plateforme 4 à l'étape 33 de la requête redirigée, la plateforme 4 déduit de l'identité privée du champ de destination de la requête redirigée, le profil d'abonné associé à l'identité privée.

A une étape 34, la requête redirigée est alors traitée selon le profil d'abonné de l'utilisateur du terminal appelé. Le profil d'abonné dépend des services offerts par la plateforme et de la configuration de ces services par l'utilisateur du terminal appelé. Par exemple, le profil d'abonné d'un utilisateur peut comprendre l'identifiant public du terminal du réseau local 1 appartenant à l'utilisateur. En outre, le profil d'abonné de l'utilisateur peut comprendre un identifiant public d'au moins un autre terminal (de type terminal mobile, poste fixe du RTC, ou terminal fixe d'un autre réseau local géré par la plateforme 4, par exemple) de l'utilisateur. Ainsi, il est possible de mettre en oeuvre un service de sonnerie simultanée ou séquentielle de plusieurs terminaux d'un même utilisateur, l'un de ces terminaux appartenant au réseau local 1 et étant le terminal appelé vers lequel la requête initiale était initialement destinée. Afin de mettre en oeuvre ce service de sonnerie simultanée, la requête redirigée reçue par la plateforme 4 peut être modifiée afin de remplacer l'identifiant privé par l'identifiant public du terminal de l'utilisateur appelé situé dans le réseau local. En outre, une nouvelle requête peut être créée à destination de l'identité de l'autre terminal de l'utilisateur appelé. Au moins deux requêtes peuvent ainsi être envoyées séquentiellement ou simultanément afin de faire sonner les deux terminaux d'un même utilisateur appelé. Un tel service présente des avantages certains pour les utilisateurs nomades (tels que des commerciaux) amenés fréquemment à se déplacer. De cette manière, de tels utilisateurs peuvent rester joignables à tout instant, même lorsqu'un appel initié depuis le réseau local 1 est reçu.

En complément, le profil d'abonné peut en outre comprendre un service de routage vers un serveur de messagerie centralisé, lorsqu'au moins deux requêtes sont envoyées par la plateforme 4 vers deux terminaux distincts d'un même utilisateur. En effet, la signalisation transitant, selon l'invention, par la plateforme 4 pour toutes les requêtes internes et externes destinées à l'un des terminaux 3.1 à 3.n d'un utilisateur du réseau local 1, en cas d'échec des appels simultanés ou séquentiels, la plateforme 4 peut effectuer un renvoi vers une messagerie vocale mobile par exemple, initialement dédiée à l'autre terminal de l'utilisateur appelé. L'utilisateur appelant, situé dans le réseau local 1, peut ainsi laisser un message sur la messagerie mobile de l'utilisateur appelé, alors que l'utilisateur appelant a initialement tenté de joindre l'appelé par un appel interne sur l'un des terminaux du réseau local 1. La messagerie mobile héberge alors à la fois des messages destinés à ce terminal du réseau local 1 et au terminal d'un réseau de communication tiers (mobile, fixe du réseau RTC ou terminal fixe d'un autre réseau local géré par la plateforme 4), d'un même utilisateur appelé.

En variante, au lieu de router la requête redirigée reçue par la plateforme 4 vers le terminal de l'utilisateur appelé du réseau local 1 et de générer en plus une nouvelle requête vers un terminal de réseau tiers de cet utilisateur appelé, la présente invention prévoit un service de renvoi de la requête redirigée reçue par la plateforme 4 vers le terminal de réseau tiers de l'utilisateur appelé. Ainsi, sur réception par la plateforme 4 de la requête redirigée par l'autocommutateur 2, la plateforme 4 peut remplacer l'identifiant privé de l'utilisateur appelé par l'identifiant public du terminal de réseau tiers (mobile ou fixe RTC) de l'utilisateur appelé.

De tels services peuvent être configurés au préalable par l'utilisateur appelé. En outre, l'utilisateur appelé peut choisir de ne mettre en oeuvre aucun de ces services, auquel cas la requête redirigée est uniquement routée par la plateforme 4 à destination du terminal appelé du réseau local 1.

Suite à l'étape 34, la requête redirigée reçue par la plateforme 4 est alors traitée selon le profil d'abonné de l'utilisateur appelé.

A une étape 35, la plateforme 4 détermine, pour chaque requête à router (étant entendu, au vu de ce qui précède, que plusieurs requêtes à destination de plusieurs terminaux de l'utilisateur appelé peuvent être générées), si la destination de la requête à router (la requête redirigée dont le champ destinataire a été modifié pour indiquer l'identifiant publique du terminal appelé, ou la nouvelle requête) est un terminal appartenant au réseau local 1 du terminal appelant.

Si la destination de la requête à router est un terminal appartenant au réseau local 1 du terminal appelant, la requête à router est envoyée à l'autocommutateur 2, qui vérifie, conformément à l'étape 31, s'il s'agit ou non d'une requête provenant d'un terminal interne au réseau local 1. La requête provenant de la plateforme 4, la requête est routée en interne par l'autocommutateur 2 selon l'étape 36 détaillée ultérieurement.

En revanche, si la destination de la requête à router est un terminal n'appartenant pas au réseau local 1 du terminal appelant, la plateforme 4 vérifie, à une étape 41, que la destination est connue par la plateforme 4. La destination peut être connue lorsque l'autre terminal de l'utilisateur appelé est un terminal d'un autre réseau local géré par la plateforme 4.

Si la destination de la requête à router est connue de la plateforme 4, l'étape 34 est répétée pour mettre en oeuvre les services définis pour l'autre terminal de l'utilisateur appelé, qui est connecté à l'autre réseau local.

En revanche, si la destination n'est pas connue de la plateforme 4, la plateforme peut transmettre router la requête vers le réseau RTC 5 via une passerelle afin que le réseau RTC route cette requête vers d'autres opérateurs ou vers le réseau mobile.

A l'étape 36, après que l'autocommutateur 2 a reçu la requête routée par la plateforme 4 et destinée à l'identifiant public du terminal de l'utilisateur appelé du réseau local 1, l'autocommutateur 2 route la requête vers le terminal du réseau local 1 qui est identifié par l'autocommutateur 2 grâce à l'identifiant public contenu dans le champ de destination de la requête routée.

A l'étape 37, le terminal du réseau local 1 sonne.

A l'étape 38, le terminal de l'utilisateur appelé du réseau local 1 peut être décroché ou non.

Si le terminal de l'utilisateur appelé du réseau local 1 est décroché, la plateforme 4, qui a au préalable détecté que l'appel est interne au réseau local 1, relâche les données média à échanger entre le terminal de l'utilisateur appelé dans le réseau local 1 et le terminal de l'utilisateur appelant, les données média étant échangées directement sans transiter par la plateforme 4 (selon une définition du terme « relâchement des données média » donnée précédemment). En revanche, les données de signalisation continuent à transiter par la plateforme 4, sans toutefois que la CAC du réseau local 1 soit incrémentée.

L'appel s'achève alors à une étape 40.

Dans le cas où, à l'étape 37, le terminal de l'utilisateur appelé du réseau local 1 n'est pas décroché, la plateforme vérifie si un service de messagerie centralisé est prévu dans le profil d'abonné de l'utilisateur appelé.

Si aucun service de messagerie centralisé n'est prévu, l'appel s'achève à une étape 44.

Si un service de messagerie centralisé est prévu, l'étape de traitement de la requête redirigée selon le profil d'abonné est répétée à l'étape 34 afin de renvoyer l'utilisateur appelant sur un serveur de messagerie (mobile par exemple) de l'utilisateur appelé, tel que précédemment expliqué.

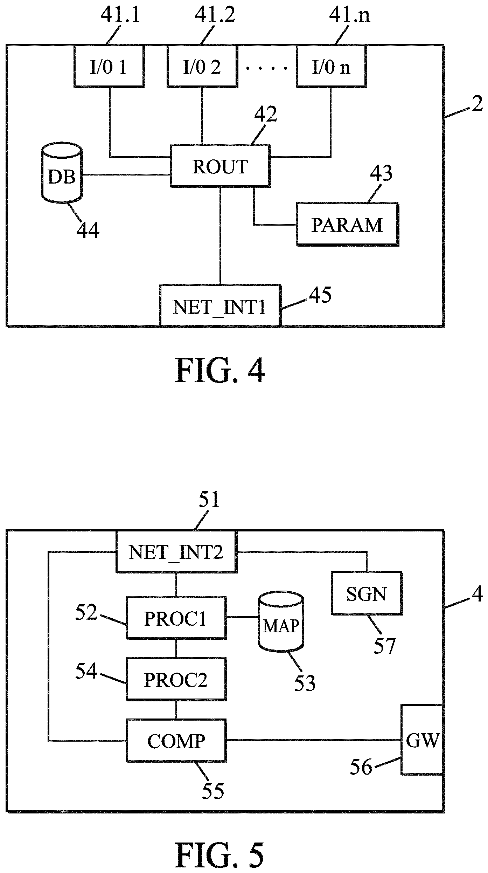

La **figure 4** représente un dispositif de routage, tel que l'autocommutateur 2 représenté en figure 1, selon un mode de réalisation de l'invention.

L'autocommutateur 2 comprend une pluralité d'interfaces d'entrée/sortie 41.1, 41.2...41.n vers les terminaux de communications 3.1-3.n respectivement. Les interfaces d'entrée/sortie permettent de recevoir et de transmettre les requêtes initiales d'initiation de session de communication depuis ou vers les terminaux 3.1-3.n. L'autocommutateur 2 comprend en outre une interface réseau 45 reliée à la plateforme 4, permettant de recevoir des requêtes depuis la plateforme 4 ou de transmettre des requêtes vers la plateforme 4.

L'autocommutateur 2 comprend en outre une unité de routage 42, adaptée pour router les requêtes reçues depuis la plateforme 4 ou depuis les terminaux 3.1-3.n du réseau local 1.

L'unité de routage 42 est reliée en outre à une base de données 44 comprenant un PNP, et stockant notamment en association les identifiants de terminal des terminaux 3.1-3.n en association avec les identifiants privés de leurs utilisateurs respectifs, selon l'invention.

L'unité de routage 42 est en outre reliée à une unité de paramétrage permettant de paramétrer la redirection inconditionnelle vers la plateforme 4 des requêtes initiales d'initialisation de session de communication entre deux terminaux 3.1-3.n du réseau local 1, et de paramétrer le routage vers un terminal du réseau local 1 des requêtes reçues de la plateforme 4 à destination d'un identifiant public du terminal.

La **figure 5** représente une plateforme de service, telle que la plateforme 4 représentée sur la figure 1, selon un mode de réalisation de l'invention.

La plateforme 4 comprend une interface réseau 51 reliée à un ou plusieurs autocommutateurs 2 tels que représentés en figure 4. L'interface 4 permet de recevoir et de transmettre des requêtes d'initiation de session de communication depuis et vers les autocommutateurs 2. La plateforme 4 comprend une interface 56 reliée à une passerelle vers le réseau RTC 5 et vers d'autres réseaux IP.

La plateforme 4 comprend en outre une première unité de traitement 52 adaptée pour mettre en oeuvre l'étape 33 de la figure 3. A cet effet, la première unité de traitement 52 est reliée à une base de données 53 dans laquelle sont stockés les identifiants privés des terminaux des réseaux locaux gérés par les autocommutateurs 2, en association avec les profils d'abonnés des utilisateurs respectifs des terminaux.

La plateforme 4 comprend une seconde unité de traitement 54 adaptée pour mettre en oeuvre l'étape 34 de la figure 3 et pour ainsi traiter une requête redirigée destinée à un utilisateur en fonction du profil d'abonné de cet utilisateur.

La seconde unité de traitement 54 est reliée à une unité de comparaison 54 adaptée pour mettre en oeuvre les étapes 35 et 41 de la figure 3. L'unité de comparaison 54 permet donc de déterminer si les requêtes redirigées doivent être acheminées vers le réseau RTC via l'interface 56 ou vers les autocommutateurs 2 via l'interface réseau 51.

La plateforme 4 comprend en outre une unité de signalisation 57 adaptée pour relâcher les données média lorsqu'un appel est établi entre deux terminaux situés sur le même site local.

Bien entendu, la présente invention ne se limite pas aux modes de réalisation décrits ci-avant, donnés à titre d'exemple ; elle s'étend à d'autres variantes de réalisation, limitée seulement par les revendications annexées.

## Revendications

1. Procédé d'initiation d'une session de communication entre un premier utilisateur appelant et un second utilisateur appelé, les premier et second utilisateurs étant associés respectivement à au moins des premier et second terminaux de communication (3.1-3.n) d'un réseau local (1) géré par un autocommutateur (2), ledit autocommutateur étant apte à communiquer avec une plateforme de services (4) externe au réseau local, ledit procédé étant **caractérisé en ce qu'**il comprend :
- réception par l'autocommutateur d'une requête initiale d'initiation d'une session de communication émise depuis le premier terminal à destination du second terminal, ladite requête initiale comportant un identifiant du second terminal ;
- déduction par l'autocommutateur d'un identifiant privé du second utilisateur stocké en association avec l'identifiant du second terminal ;
- redirection de ladite requête initiale vers la plateforme externe, à destination de l'identifiant privé du second utilisateur;
- sur réception, par la plateforme de services (4), de la requête redirigée par l'autocommutateur (2), accès à un profil d'abonné du second utilisateur associé à l'identifiant privé contenu dans la requête;
- traitement par ladite plateforme de la requête redirigée, selon le profil d'abonné associé audit identifiant privé du second utilisateur, en vue de l'établissement d'une session de communication entre le premier utilisateur et le second utilisateur.

2. Procédé selon la revendication 1, **caractérisé en ce que** le second terminal (3.n) est identifié dans la requête initiale par un identifiant public routable sur un réseau externe (5, 6, 7) et sur le réseau local (1), ou par un identifiant routable uniquement dans le réseau local géré par l'autocommutateur (2).

3. Procédé selon la revendication 1, **caractérisé en ce que** l'autocommutateur (2) est configuré pour rediriger inconditionnellement vers la plateforme de services (4) les requêtes initiales d'initiation de sessions entre deux terminaux (3.1-3.n) du réseau local (1), et est configuré pour router vers un terminal du réseau local les requêtes reçues de la plateforme de services externe à destination d'un identifiant public dudit terminal.

4. Procédé selon les revendications 1 à 3, **caractérisé en ce que** le profil d'abonné du second utilisateur comprend un identifiant public du second terminal (3.n), ledit identifiant public permettant le routage de la requête redirigée vers le second terminal, et **en ce que**, si le profil d'abonné est défini pour faire sonner ledit second terminal, le traitement de la requête comprend :
- redirection de la requête reçue par la plateforme de services, à l'autocommutateur (2), en remplaçant l'identifiant privé du second utilisateur par l'identifiant public du second terminal ;
- sur réception, par l'autocommutateur, de la requête redirigée par la plateforme de services, routage de ladite requête redirigée vers le second terminal du réseau local en vue d'établir une session de communication entre le premier terminal (3.1) et le second terminal.

5. Procédé selon la revendication 4, **caractérisé en ce que**, sur réponse positive du second terminal (3.n) du réseau local (1) et sur détection par la plateforme de services (4) que le premier terminal (3.1) et le second terminal appartiennent au même réseau local, une session de communication est établie entre le premier terminal et le second terminal,
seules des données de signalisation échangées entre le premier terminal et le second terminal transitant par la plateforme de services,
des données média à échanger entre le premier terminal et le second terminal transitant dans le réseau local.

6. Procédé selon la revendication 4 ou 5, **caractérisé en ce que** le profil d'abonné du second utilisateur comprend en outre un autre identifiant public d'au moins un troisième terminal, ledit troisième terminal étant un terminal du second utilisateur et étant accessible via un réseau de communication tiers (6, 7), **en ce que** le profil d'abonné est défini pour transmettre une nouvelle requête à destination dudit autre identifiant public, séquentiellement ou simultanément à la requête renvoyée à l'autocommutateur (2) et comprenant l'identifiant public du second terminal (3.n).

7. Procédé selon la revendication 6, **caractérisé en ce que** le profil d'abonné du second utilisateur comprend en outre un renvoi vers un serveur de messagerie centralisé, et **en ce que**, lorsqu'aucune session de communication n'est établie, ni entre le premier terminal (3.1) et le second terminal (3.n), ni entre le premier terminal et le troisième terminal, la plateforme de services renvoie la requête redirigée vers ledit serveur de messagerie du second utilisateur.

8. Procédé selon les revendications 1 à 3 **caractérisé en ce que** le profil d'abonné du second utilisateur comprend un identifiant public d'au moins un troisième terminal du second utilisateur, ledit troisième terminal étant accessible via un réseau de communication tiers (6, 7), **en ce que** le profil d'abonné est défini pour renvoyer les requêtes destinées au second utilisateur vers le troisième terminal, et **en ce que** le procédé comprend en outre la transmission de la requête redirigée vers ledit réseau de communication tiers en remplaçant l'identifiant privé du second utilisateur par l'identifiant public du troisième terminal.

9. Produit programme d'ordinateur comprenant des instructions de code de programme enregistrées sur un support lisible par un ordinateur, pour l'exécution des étapes du procédé selon l'une quelconque des revendications 1 à 8.

10. Dispositif de routage téléphonique en charge de la gestion d'un réseau local (1) comprenant au moins un premier terminal de communication (3.1) d'un premier utilisateur et un second terminal de communication (3.n) d'un second utilisateur, ledit dispositif de routage (2) comprenant des moyens de communication (45) avec une plateforme de services (4) externe au réseau local, **caractérisé en ce que** ledit dispositif de routage comprend :
- des moyens de stockage (44) pour stocker un identifiant privé pour chaque utilisateur du réseau local en association avec un identifiant du terminal dudit utilisateur dans le réseau local ;
la plateforme de services stockant l'identifiant privé de chaque utilisateur du réseau local avec un profil d'abonné dudit utilisateur ;
- des moyens de réception (41.1-41.n) d'une requête d'initiation d'une session de communication émise depuis le premier terminal, ladite requête comprenant un identifiant du second terminal ;
- des moyens de déduction par l'autocommutateur de l'identifiant privé du second utilisateur associé à l'identifiant du second terminal et de renvoi (42, 43) de ladite requête vers la plateforme externe, à destination de l'identifiant privé associé au second utilisateur, afin que la plateforme traite la requête selon le profil d'abonné du second utilisateur associé à l'identifiant privé en vue de l'établissement d'une session de communication entre le premier utilisateur et le second utilisateur.

11. Système pour l'établissement d'une session de communication entre un premier utilisateur et un second utilisateur, les premier et second utilisateurs étant associés respectivement à au moins des premier et second terminaux de communication (3.1-3.n) d'un réseau local (1), **caractérisé en ce que** le système comprend un dispositif de routage (2) selon la revendication 10, gérant ledit réseau local, et une plateforme de services (4) comprenant :
- des moyens de stockage (53) d'un identifiant privé de chaque utilisateur du réseau local avec un profil d'abonné dudit utilisateur ;
- des moyens de réception (51) pour recevoir une requête du dispositif de routage, la requête étant destinée à l'identifiant privé du second utilisateur;
- des moyens d'accès au profil d'abonné du second utilisateur associé à l'identifiant privé contenu dans la requête;
- des moyens de traitement (52, 54) pour traiter la requête selon le profil d'abonné du second utilisateur associé à l'identifiant privé contenu dans la requête.

## Patentansprüche

1. Verfahren zum Beginnen einer Kommunikationssitzung zwischen einem ersten, anrufenden Anwender und einem zweiten, angerufenen Anwender, wobei der erste und der zweite Anwender einem ersten bzw. einem zweiten Kommunikationsendgerät (3.1, 3.n) eines durch eine Selbstwähleinrichtung (2) gesteuerten lokalen Netzes (1) zugeordnet sind, wobei die Selbstwähleinrichtung dafür ausgelegt ist, mit einer außerhalb des lokalen Netzes befindlichen Dienstplattform (4) zu kommunizieren, wobei das Verfahren **dadurch gekennzeichnet, ist, dass** es Folgendes umfasst:
- Empfangen durch die Selbstwähleinrichtung einer anfänglichen Anforderung zum Beginnen einer Kommunikationssitzung, die von dem ersten Endgerät zu dem zweiten Endgerät ausgesendet wird, wobei die anfängliche Anforderung eine Kennung des zweiten Endgeräts enthält;
- Ableiten durch die Selbstwähleinrichtung einer privaten Kennung des zweiten Anwenders, die in Zuordnung zu der Kennung des zweiten Endgeräts gespeichert ist;
- Weiterleiten der anfänglichen Anforderung zu der äußeren Plattform mit dem Ziel der privaten Kennung des zweiten Anwenders;
- bei Empfang durch die Dienstplattform (4) der durch die Selbstwähleinrichtung (2) weitergeleiteten Anforderung Zugreifen auf ein Teilnehmerprofil des zweiten Anwenders, das der privaten Kennung zugeordnet ist, die in der Anforderung enthalten ist;
- Verarbeiten durch die Plattform der weitergeleiteten Anforderung entsprechend dem Teilnehmerprofil, das der privaten Kennung des zweiten Anwenders zugeordnet ist, um eine Kommunikationssitzung zwischen dem ersten Anwender und dem zweiten Anwender aufzubauen.

2. Verfahren nach Anspruch 1, **dadurch gekennzeichnet, dass** das zweite Endgerät (3.n) in der anfänglichen Anforderung durch eine öffentliche Kennung, die in einem externen Netz (5, 6, 7) und in dem lokalen Netz (1) geführt werden kann, oder durch eine Kennung, die ausschließlich in dem durch die Selbstwähleinrichtung (2) gesteuerten lokalen Netz geführt werden kann, identifiziert wird.

3. Verfahren nach Anspruch 1, **dadurch gekennzeichnet, dass** die Selbstwähleinrichtung (2) konfiguriert ist, die anfänglichen Anforderungen zum Beginnen von Sitzungen zwischen zwei Endgeräten (3.1-3.n) des lokalen Netzes (1) bedingungslos zu der Dienstplattform (4) umzuleiten, und konfiguriert ist, die von der externen Dienstplattform empfangenen Anforderungen, die als Ziel eine öffentliche Kennung des Endgeräts haben, zu einem Endgerät des lokalen Netzes zu leiten.

4. Verfahren nach den Ansprüchen 1 bis 3, **dadurch gekennzeichnet, dass** das Teilnehmerprofil des zweiten Anwenders eine öffentliche Kennung des zweiten Endgeräts (3.n) enthält, wobei die öffentliche Kennung das Lenken der zu dem zweiten Endgerät umgelenkten Anforderung ermöglicht, und dass dann, wenn das Teilnehmerprofil so definiert ist, dass es ein Klingeln des zweiten Endgeräts hervorruft, die Verarbeitung der Anforderung Folgendes umfasst:
- Umlenken der von der Dienstplattform empfangenen Anforderung zu der Selbstwähleinrichtung (2) durch Ersetzen der privaten Kennung des zweiten Anwenders durch die öffentliche Kennung des zweiten Endgeräts;
- bei Empfang durch die Selbstwähleinrichtung der durch die Dienstplattform umgelenkten Anforderung Lenken der umgelenkten Anforderung zu dem zweiten Endgerät des lokalen Netzes, um eine Kommunikationssitzung zwischen dem ersten Endgerät (3.1) und dem zweiten Endgerät aufzubauen.

5. Verfahren nach Anspruch 4, **dadurch gekennzeichnet, dass** in Reaktion auf eine positive Antwort des zweiten Endgeräts (3.n) des lokalen Netzes (1) und auf eine Detektion durch die Dienstplattform (4), dass das erste Endgerät (3.1) und das zweite Endgerät zum selben lokalen Netz gehören, eine Kommunikationssitzung zwischen dem ersten Endgerät und dem zweiten Endgerät aufgebaut wird,
wobei nur Signalgebungsdaten, die zwischen dem ersten Endgerät und dem zweiten Endgerät ausgetauscht werden, durch die Dienstplattform laufen,
während Mediendaten, die zwischen dem ersten Endgerät und dem zweiten Endgerät ausgetauscht werden sollen, in dem lokalen Netz laufen.

6. Verfahren nach Anspruch 4 oder 5, **dadurch gekennzeichnet, dass** das Teilnehmerprofil des zweiten Anwenders außerdem eine weitere öffentliche Kennung wenigstens eines dritten Endgeräts enthält, wobei das dritte Endgerät ein Endgerät des zweiten Anwenders ist, auf das über ein Kommunikationsnetz (6, 7) Dritter zugegriffen werden kann, und dass das Teilnehmerprofil definiert ist, um eine neue Anforderung mit der weiteren öffentlichen Kennung als Ziel nacheinander oder gleichzeitig mit der zu der Selbstwähleinrichtung (2) geschickten Anforderung, die die öffentliche Kennung des zweiten Endgeräts (3.n) enthält, zu übertragen.

7. Verfahren nach Anspruch 6, **dadurch gekennzeichnet, dass** das Teilnehmerprofil des zweiten Anwenders außerdem ein Schicken zu einem zentralen Nachrichtenserver enthält und dass dann, wenn keinerlei Kommunikationssitzung aufgebaut ist, weder zwischen dem ersten Endgerät (3.1) und dem zweiten Endgerät (3.n) noch zwischen dem ersten Endgerät und dem dritten Endgerät, die Dienstplattform die umgelenkte Anforderung zu dem Nachrichtenserver des zweiten Anwender schickt.

8. Verfahren nach den Ansprüchen 1 bis 3, **dadurch gekennzeichnet, dass** das Teilnehmerprofil des zweiten Anwenders eine öffentliche Kennung wenigstens eines dritten Endgeräts des zweiten Anwenders enthält, wobei auf das dritte Endgerät über ein Kommunikationsnetz (6, 7) Dritter zugegriffen werden kann, dass das Teilnehmerprofil definiert ist, um die Anforderung, die für den zweiten Anwender bestimmt sind, zu dem dritten Endgerät zu schicken, und dass das Verfahren außerdem das Übertragen der zu dem Kommunikationsnetz Dritter umgelenkten Anforderung durch Ersetzen der privaten Kennung des zweiten Anwenders durch die öffentliche Kennung des dritten Endgeräts umfasst.

9. Computerprogrammprodukt, das Programmcodebefehle enthält, die auf einem computerlesbaren Träger aufgezeichnet sind, um die Schritte des Verfahrens nach einem der Ansprüche 1 bis 8 auszuführen.

10. Telefonlenkungsvorrichtung, die die Aufgabe hat, ein lokales Netz (1) zu steuern, das wenigstens ein erstes Kommunikationsendgerät (3.1) eines ersten Anwenders und ein zweites Kommunikationsendgerät (3.n) eines zweiten Anwenders enthält, wobei die Lenkungsvorrichtung (2) Mittel (45) für die Kommunikation mit einer außerhalb des lokalen Netzes befindlichen Dienstplattform (4) enthält, **dadurch gekennzeichnet, dass** die Lenkungsvorrichtung Folgendes umfasst:
- Speichermittel (44) zum Speichern einer privaten Kennung für jeden Anwender des lokalen Netzes in Zuordnung zu einer Kennung des Endgeräts des Anwenders in dem lokalen Netz;
wobei die Dienstplattform die private Kennung jedes Anwenders des lokalen Netzes mit einem Teilnehmerprofil des Anwenders speichert;
- Mittel (41.1-41.n) einer Anforderung zum Beginnen einer Kommunikationssitzung, die von dem ersten Endgerät ausgesendet wird, wobei die Anforderung eine Kennung des zweiten Endgeräts enthält;
- Mittel zum Ableiten durch die Selbstwähleinrichtung der privaten Kennung des zweiten Anwenders, die der Kennung des zweiten Endgeräts zugeordnet ist, und zum Schicken (42, 43) der Anforderung zu der externen Plattform mit dem Ziel der dem zweiten Anwender zugeordneten privaten Kennung, damit die Plattform die Anforderung entsprechend dem Teilnehmerprofil des zweiten Anwenders, das der privaten Kennung zugeordnet ist, verarbeitet, um eine Kommunikationssitzung zwischen dem ersten Anwender und dem zweiten Anwender aufzubauen.

11. System zum Aufbauen einer Kommunikationssitzung zwischen einem ersten Anwender und einem zweiten Anwender, wobei der erste und der zweite Anwender wenigstens einem ersten bzw. einem zweiten Kommunikationsendgerät (3.1-3.n) eines lokalen Netzes (1) zugeordnet sind, **dadurch gekennzeichnet, dass** das System eine Lenkungsvorrichtung (2) nach Anspruch 10 enthält, die das lokale Netz steuert, und eine Dienstplattform (4) enthält, die Folgendes umfasst:
- Mittel (53) zum Speichern einer privaten Kennung jedes Anwenders des lokalen Netzes mit einem Teilnehmerprofil des Anwenders;
- Empfangsmittel (51) zum Empfangen einer Anforderung der Lenkungsvorrichtung, wobei die Anforderung die private Kennung des zweiten Anwenders als Ziel hat;
- Mittel zum Zugreifen auf das Teilnehmerprofil des zweiten Anwenders, das der in der Anforderung enthaltenen privaten Kennung zugeordnet ist;
- Verarbeitungsmittel (52, 54), um die Anforderung entsprechend dem Teilnehmerprofil des zweiten Anwenders, das der in der Anforderung enthaltenen privaten Kennung zugeordnet ist, zu verarbeiten.

## Claims

1. Method for initiating a communication session between a calling first user and a called second user, the first and second users being associated with at least one of the first and second communication terminals (3.1-3.n), respectively, of a local area network (1) managed by an automatic exchange (2), said automatic exchange being able to communicate with a service platform (4) external to the local area network, said method being **characterized in that** it comprises:
- reception, by the automatic exchange, of an initial request to initiate a communication session, transmitted from the first terminal to the second terminal, said initial request including an identifier of the second terminal;
- deduction, by the automatic exchange, of a private identifier of the second user stored in association with the identifier of the second terminal;
- redirection of said initial request to the external platform, to the private identifier of the second user;
- upon reception, by the service platform (4), of the request redirected by the automatic exchange (2), accessing of a subscriber profile of the second user associated with the private identifier contained in the request;
- processing, by said platform, of the redirected request depending on the subscriber profile associated with said private identifier of the second user, for the purpose of establishing a communication session between the first user and the second user.

2. Method according to Claim 1, **characterized in that** the second terminal (3.n) is identified in the initial request by a public identifier able to be routed on an external network (5, 6, 7) and on the local area network (1), or by an identifier able to be routed only in the local area network managed by the automatic exchange (2).

3. Method according to Claim 1, **characterized in that** the automatic exchange (2) is configured to unconditionally redirect, to the service platform (4), the initial requests to initiate sessions between two terminals (3.1-3.n) of the local area network (1), and is configured to route, to a terminal of the local area network, the received requests from the external service platform to a public identifier of said terminal.

4. Method according to Claims 1 to 3, **characterized in that** the subscriber profile of the second user comprises a public identifier of the second terminal (3.n), said public identifier allowing the redirected request to be routed to the second terminal, and **in that**, if the subscriber profile is defined so as to make said second terminal sound, the processing of the request comprises:
- redirecting the request received by the service platform to the automatic exchange (2), by replacing the private identifier of the second user with the public identifier of the second terminal;
- upon reception, by the automatic exchange, of the request redirected by the service platform, routing said redirected request to the second terminal of the local area network for the purpose of establishing a communication session between the first terminal (3.1) and the second terminal.

5. Method according to Claim 4, **characterized in that**, upon a positive response from the second terminal (3.n) of the local area network (1) and upon detection, by the service platform (4), that the first terminal (3.1) and the second terminal belong to the same local area network, a communication session is established between the first terminal and the second terminal,
only signalling data exchanged between the first terminal and the second terminal transiting through the service platform,
media data to be exchanged between the first terminal and the second terminal transiting in the local area network.

6. Method according to Claim 4 or 5, **characterized in that** the subscriber profile of the second user furthermore comprises another public identifier of at least one third terminal, said third terminal being a terminal of the second user and being accessible via a third-party communication network (6, 7), and **in that** the subscriber profile is defined so as to transmit a new request to said other public identifier, sequentially or at the same time as the request relayed to the automatic exchange (2) and comprising the public identifier of the second terminal (3.n).

7. Method according to Claim 6, **characterized in that** the subscriber profile of the second user furthermore comprises a relay to a centralized messaging server, and **in that**, when no communication session has been established, either between the first terminal (3.1) and the second terminal (3.n) or between the first terminal and the third terminal, the service platform relays the redirected request to said messaging server of the second user.

8. Method according to Claims 1 to 3, **characterized in that** the subscriber profile of the second user comprises a public identifier of at least one third terminal of the second user, said third terminal being accessible via a third-party communication network (6, 7), and **in that** the subscriber profile is defined so as to relay the requests intended for the second user to the third terminal, and **in that** the method furthermore comprises transmitting the redirected request to said third-party communication network by replacing the private identifier of the second user with the public identifier of the third terminal.

9. Computer program product comprising program code instructions recorded on a computer-readable medium for executing the steps of the method according to any one of Claims 1 to 8.

10. Telephone routing device responsible for managing a local area network (1) comprising at least one first communication terminal (3.1) of a first user and one second communication terminal (3.n) of a second user, said routing device (2) comprising means (45) for communicating with a service platform (4) external to the local area network, **characterized in that** said routing device comprises:
- storage means (44) for storing a private identifier for each user of the local area network in association with an identifier of the terminal of said user in the local area network;
the service platform storing the private identifier of each user of the local area network with a subscriber profile of said user;
- means (41.1-41.n) for receiving a request to initiate a communication session, transmitted from the first terminal, said request comprising an identifier of the second terminal;
- means for deduction, by the automatic exchange, of the private identifier of the second user associated with the identifier of the second terminal and for relaying (42, 43) said request to the external platform, to the private identifier associated with the second user, so that the platform processes the request depending on the subscriber profile of the second user associated with the private identifier for the purpose of establishing a communication session between the first user and the second user.

11. System for establishing a communication session between a first user and a second user, the first and second users being associated with at least first and second communication terminals (3.1-3.n), respectively, of a local area network (1), **characterized in that** the system comprises a routing device (2) according to Claim 10, managing said local area network, and a service platform (4) comprising:
- means (53) for storing a private identifier of each user of the local area network with a subscriber profile of said user;
- reception means (51) for receiving a request from the routing device, the request being intended for the private identifier of the second user;
- means for accessing the subscriber profile of the second user associated with the private identifier contained in the request;
- processing means (52, 54) for processing the request depending on the subscriber profile of the second user associated with the private identifier contained in the request.
